# FASCICULE DE BREVET EUROPEEN

(11) **EP 2 715 927 B1**
(45) Date de publication et mention de la délivrance du brevet: **27.12.2017**
(21) Numéro de dépôt: 12728694.6
(22) Date de dépôt: 15.05.2012
(51) Int. Cl.: B60L 11/18, H02M 1/44, H02M 7/217

(54) **PROCEDE DE COMMANDE DES INTERRUPTEURS D'UN REDRESSEUR DE COURANT CONNECTE A UN CHARGEUR EMBARQUE**
VERFAHREN ZUR STEUERUNG DER SCHALTER EINES STROMRICHTERGERÄTES VERBUNDEN MIT EINGEBAUTEM LADEGERÄT
METHOD FOR CONTROLLING SWITCHES OF A CURRENT RECTIFIER CONNECTED TO AN ON-BOARD CHARGER

(30) Priorité: 23.05.2011 FR 1154467; 16.08.2011 US 201161524014 P
(43) Date de publication de la demande: 09.04.2014
(73) Titulaire: Renault S.A.S., 92100 Boulogne-Billancourt (FR)
(72) Inventeur: RIPOLL, Christophe, F-78460 Chevreuse (FR); JANIAUD, Noëlle, F-91940 Les Ulis (FR); REYSS, Olivier, F-75014 Paris (FR)
(74) Mandataire: Rougemont, Bernard
(86) Numéro de dépôt international: PCT/FR2012/051086
(87) Numéro de publication internationale: WO 2012/160295

(56) Documents cités:
- CN-A- 101 783 607
- FR-A1- 2 943 188
- US-E1- R E38 439
- KLUMPNER C ET AL: "A new buck-type active front end rectifier topology with improved voltage transfer ratio and common mode voltage cancellation", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, CONFERENCE RECORD OF THE 2005 IEEE INDUSTRY APPLICATIONS CONFERENCE FORTIETH IAS ANNUAL MEETING (IEEE CAT. NO. 05, vol. 1, 2 octobre 2005 (2005-10-02), pages 631-638, XP010842434, DOI: 10.1109/IAS.2005.1518373 ISBN: 978-0-7803-9208-3
- MICHAEL H BIERHOFF ET AL: "Loss Minimized Pulse Width Modulation of IGBT Current Source Converters", IEEE INDUSTRIAL ELECTRONICS, IECON 2006 - 32ND ANNUAL CONFERENCE ON, IEEE, PISCATAWAY, NJ, USA, 1 novembre 2006 (2006-11-01), pages 1739-1744, XP031077478, ISBN: 978-1-4244-0135-2
- KLUMPNER C ET AL: "A new class of hybrid AC/AC direct power converters", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, CONFERENCE RECORD OF THE 2005 IEEE INDUSTRY APPLICATIONS CONFERENCE FORTIETH IAS ANNUAL MEETING (IEEE CAT. NO. 05, vol. 4, 2 octobre 2005 (2005-10-02), pages 2374-2381, XP010842741, DOI: 10.1109/IAS.2005.1518793 ISBN: 978-0-7803-9208-3

## Description

L'invention a pour domaine technique la commande des redresseurs de courant et plus précisément la commande des redresseurs de courant de systèmes sans isolation galvanique.

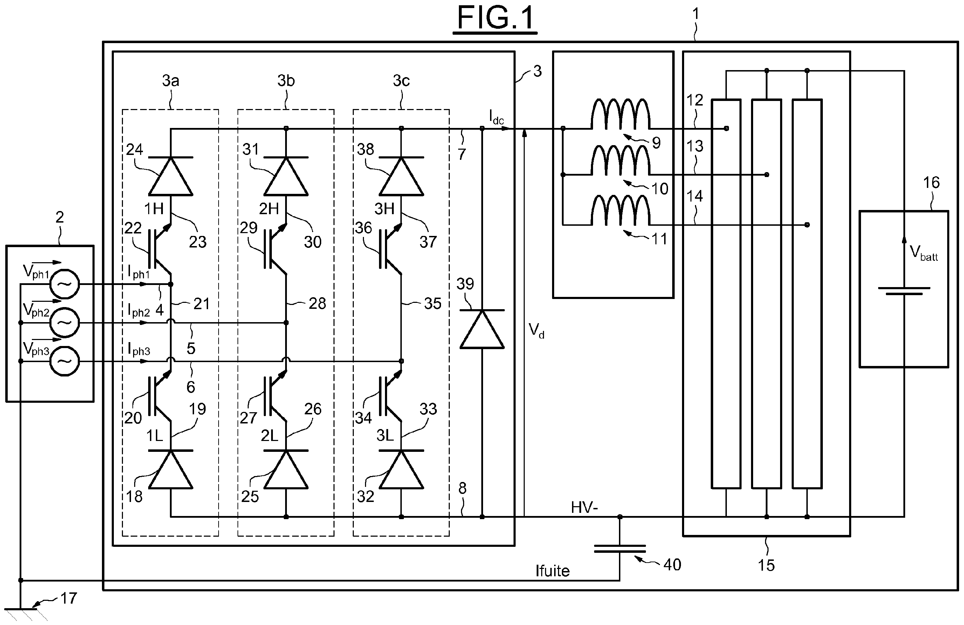

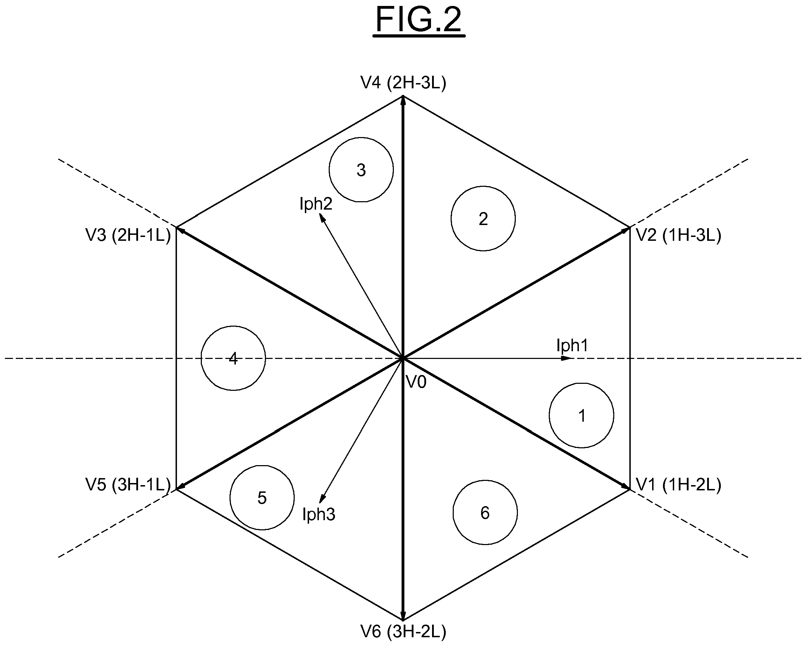

La demande de brevet d'invention publiée FR2943188 divulgue un dispositif (1 Fig.1) de charge d'une batterie comprenant un étage d'entrée redresseur (6 Fig.2) destiné à être raccordé à un réseau d'alimentation (3) et un étage de sortie (7) onduleur destiné à être raccorde à une batterie (2).

L'utilisation d'un chargeur non isolé triphasé dans un véhicule électrique engendre, lors du raccordement sur le réseau de distribution, l'apparition d'un courant de fuite à la terre qui peut provoquer des perturbations sur le réseau.

L'absence d'isolation galvanique du chargeur, entre le secteur et les modules de conversion de puissance, provoque un retour des courants de fuite du véhicule vers la terre. Chaque élément, de par sa structure, présente une capacité de mode commun par rapport au châssis. Un courant de fuite apparait lorsqu'une tension alternative est appliquée à l'ensemble des capacités de mode commun.

Ce phénomène est amplifié par le découpage appliqué à l'alimentation triphasée alternative afin d'obtenir des grandeurs continues. En effet, des variations importantes de haute tension négative apparaissent lors de la commutation des interrupteurs du redresseur. Ces variations augmentent le courant de fuite de par la dépendance à la variation temporelle de la tension appliquée aux bornes des capacités de mode commun. Comme ces capacités se matérialisent entre la masse et les éléments, elles sont soumises directement et intégralement aux variations de la haute tension négative.

La solution de l'état de la technique à ce problème consiste à disposer des filtres entre le réseau d'alimentation et le redresseur, et à les dimensionner de façon adéquate.

Cependant, une telle solution présente l'inconvénient d'être couteuse.

Un but de l'invention est de limiter les courants de fuite de façon plus abordable que celle proposée dans l'état de la technique.

Un autre but de l'invention est de limiter la composante à haute fréquence des courants de fuite.

Selon un aspect de l'invention, on propose un procédé de commande des interrupteurs d'un redresseur de courant équipant un véhicule automobile muni d'un chargeur embarqué apte à être relié à un réseau triphasé de distribution électrique. Le procédé comprend les étapes au cours desquelles :
- on détermine une intensité d'un courant de point neutre requis en sortie du redresseur,
- on détermine les coordonnées du vecteur de courant permettant l'obtention dudit courant de point neutre dans l'espace de Fresnel comprenant six secteurs délimités par six vecteurs remarquables,
- on détermine un demi-secteur comprenant le vecteur de courant parmi douze demi-secteurs formant l'espace de Fresnel,
- on détermine une combinaison vectorielle pondérée des deux vecteurs remarquables délimitant le secteur de Fresnel permettant d'obtenir le vecteur de courant,
- on détermine une séquence d'ouvertures et de fermetures des interrupteurs du redresseur de courant en fonction des coefficients de pondération de la combinaison vectorielle pondérée des vecteurs remarquables, et
- on détermine une séquence d'ouvertures et de fermetures des interrupteurs du redresseur de courant permettant d'obtenir un vecteur de roue libre pour la durée restante de la période de découpage minimisant les écarts de tension entre la masse et le redresseur de tension lors du passage d'une séquence d'ouvertures et de fermetures des interrupteurs du redresseur de courant à une autre.

Par découpage classique de l'espace de Fresnel, on entend un découpage en six secteurs de même surface, d'un espace bidimensionnel orthonormé représentant l'ensemble des courants ou tensions complexes. Dans un tel espace, la norme d'un vecteur correspond à l'intensité du courant ou de la tension, tandis que sa direction indique sa phase.

Un tel procédé présente l'avantage de limiter les écarts de tension entre la sortie du redresseur et la masse, ce qui permet de limiter les courants de fuite au travers des capacités de mode commun des différents éléments du circuit électrique du véhicule. La limitation des écarts de tension passe par un choix approprié d'un vecteur de roue libre en fonction des vecteurs remarquables définissant le vecteur de courant. Le vecteur de roue libre peut dépendre du demi-secteur dans lequel le vecteur de courant se situe.

On peut déterminer, pour chaque séquence d'ouvertures et de fermetures des interrupteurs du redresseur de courant permettant d'obtenir un vecteur de courant, une séquence d'ouvertures et de fermetures des interrupteurs du redresseur de courant permettant d'obtenir un vecteur de roue libre qui présente un écart minimal de tension entre la masse et le redresseur de tension lors du passage de la séquence d'ouvertures et de fermetures des interrupteurs du redresseur de courant permettant d'obtenir le vecteur de courant à celle permettant d'obtenir le vecteur de roue libre.

On peut déterminer, pour chaque séquence d'ouvertures et de fermetures des interrupteurs du redresseur de courant permettant d'obtenir un vecteur de courant, une séquence d'ouvertures et de fermetures des interrupteurs du redresseur de courant permettant d'obtenir un vecteur de roue libre qui présente un écart de tension entre la masse et le redresseur de tension lors du passage de la séquence d'ouvertures et de fermetures des interrupteurs du redresseur de courant permettant d'obtenir le vecteur de courant à celle permettant d'obtenir le vecteur de roue libre, ledit écart de tension étant au plus égal à l'écart de tension entre deux phases.

On peut déterminer, pour chaque séquence d'ouvertures et de fermetures des interrupteurs du redresseur de courant permettant d'obtenir un vecteur de courant, une séquence d'ouvertures et de fermetures des interrupteurs du redresseur de courant permettant d'obtenir un premier vecteur de roue libre si le demi-secteur comprenant le vecteur de courant est un demi-secteur parmi quatre demi-secteurs consécutifs, un deuxième vecteur de roue libre si le demi-secteur comprenant le vecteur de courant est un demi-secteur parmi quatre autres demi-secteurs consécutifs et un troisième vecteur de roue libre si le demi-secteur comprenant le vecteur de courant est un demi-secteur parmi les quatre demi-secteurs consécutifs restants.

On peut déterminer une même séquence d'ouvertures et de fermetures des interrupteurs du redresseur de courant permettant d'obtenir un vecteur de roue libre quelle que soit la séquence d'ouvertures et de fermetures des interrupteurs du redresseur de courant permettant d'obtenir un vecteur de courant.

D'autres buts, caractéristiques et avantages apparaîtront à la lecture de la description suivante donnée uniquement en tant qu'exemple non limitatif et faite en référence aux dessins annexés sur lesquels :
- la figure 1 illustre les principaux éléments d'un véhicule électrique relié à un réseau triphasé,
- la figure 2 illustre un diagramme de Fresnel associé à un redresseur triphasé selon l'état de la technique, et
- la figure 3 illustre un diagramme de Fresnel associé à un redresseur triphasé selon l'invention.

La figure 1 illustre le réseau électrique 1 d'un véhicule électrique relié à un réseau triphasé 2 de distribution.

Le réseau électrique 1 comprend des éléments propres à la chaine de traction et des éléments spécifiques du chargeur. Ainsi, bien que compris dans des entités matériellement distinctes, ces éléments sont connectés ensemble lors de la connexion du véhicule électrique au chargeur.

Le réseau électrique 1 comprend un redresseur 3 connecté au réseau triphasé 2 par trois connexions 4,5,6 portant chacune une phase de courant. Le réseau électrique 1 est défini par deux grandeurs électriques, le courant de point neutre et la haute tension négative, apparaissant tous les deux en sortie du redresseur. Le redresseur 3 comprend trois phases 3a,3b,3c connectées en sortie à une connexion 7 portant un courant continu et à une connexion 8 portant la haute tension négative. Plus particulièrement, chaque phase du réseau triphasé 2 de distribution est reliée à la phase correspondante du redresseur 3.

La figure 1 illustre également une vue détaillée de la structure du redresseur 3. On peut voir les trois phases 3a,3b,3c reliées d'une part à la connexion 7 portant le courant de point neutre et d'autre part à la connexion 8 portant la haute tension négative.

Chaque phase 3a,3b,3c comprend une première diode 18,25,32 reliée par l'anode à la connexion 8 et dont la cathode est reliée au collecteur d'un premier transistor 20,27,34 par l'intermédiaire d'une connexion 19,26,33. L'émetteur du premier transistor 20,27,34 est relié au collecteur d'un deuxième transistor 22,29,36 par une connexion 21,28,35. L'émetteur du deuxième transistor 22,29,36 est connecté à l'anode d'une deuxième diode 24,31,38 par une connexion 23,30,37. La cathode de la deuxième diode 24,31,38 est reliée à la connexion 7.

Une diode de roue libre 39 est connectée par sa cathode aux cathodes des deuxièmes diodes 24,31,38, tandis que son anode est connectée aux anodes des premières diodes 18,25,32.

La connexion 7 est reliée aux enroulements 9,10,11 de la machine électrique de traction. Chaque enroulement 9,10,11 est également relié à une connexion 12,13,14 menant à une des phases d'un onduleur 15. Chaque phase de l'onduleur 15 est connectée à la connexion 8 portant la haute tension négative, ainsi qu'à l'anode d'une batterie 16. L'autre extrémité de chaque phase de l'onduleur 15 est connectée à la cathode de la batterie 16.

La connexion 8 portant la haute tension négative est par ailleurs connectée à la masse 17, également connectée au réseau triphasé 2 de distribution.

Le réseau triphasé 2 de distribution délivre une tension Vph1 et une intensité Iph1 sur sa première phase, une tension Vph2 et une intensité Iph2 sur sa deuxième phase et une tension Vph3 et une intensité Iph3 sur sa troisième phase.

Chaque phase du redresseur permet de générer une composante d'un courant continu de point neutre Idc émis par la connexion 7. La valeur du courant Idc dépend de la commande des transistors du redresseur 3, qui en retour détermine les courants reçus des phases du réseau triphasé 2. Le courant continu de point neutre Idc est alors utilisé afin de générer un champ magnétique au niveau des enroulements 9,10,11 de la machine électrique de traction.

La sortie du redresseur 3 donne également lieu à l'établissement d'une tension Vd entre la connexion 7 et la connexion 8. La connexion 8 est alors portée à une haute tension négative HV-.

Par ailleurs, les phases de l'onduleur 15 permettent de générer les tensions d'alimentation des enroulements 9,10,11 de la machine électrique de traction.

Le rechargement de la batterie s'effectue véhicule arrêté. Le contrôle des courants et tensions appliqués aux enroulements 9,10,11 est alors tel qu'aucun couple moteur n'est généré. Toutefois, comme expliqué plus haut, tous ces éléments rentrent dans la structure du circuit réalisé lorsque le chargeur est branché au véhicule. A ce titre, ces différents éléments apportent une contribution au rechargement de la batterie.

Le procédé de commande des interrupteurs du redresseur a pour but de déterminer les instants d'ouverture et de fermeture des interrupteurs afin d'obtenir le courant triphasé (Iph1, Iph2, Iph3) et le courant de point neutre souhaités. Le procédé de commande suivant est basé sur l'hypothèse que la somme des courants sur chaque phase est nulle (Iph1+Iph2+Iph3=0), et que les courants de chaque phase sont déphasés de 2π/3.

Chaque combinaison de positions de chacun des six interrupteurs 20,27,34,22,29,36 du redresseur permet d'obtenir un courant de point neutre connu ainsi qu'un vecteur de courant remarquable (V1, V2, V3, V4, V5, V6) dans l'espace de Fresnel. Les combinaisons d'interrupteurs, les vecteurs remarquables associés et les courants sur chaque phase sont illustrées par le Tableau 1 et leur correspondance dans l'espace de Fresnel par la figure 2. En combinant plusieurs vecteurs de courant remarquables (V1, V2, V3, V4, V5, V6), il est possible d'obtenir tous les vecteurs de courant de l'espace de Fresnel. En effet, on obtient un vecteur de courant en réalisant la somme vectorielle pondérée des deux vecteurs de courant encadrant le secteur dans lequel se trouve le vecteur de courant à réaliser. Les coefficients de pondération sont alors transposés en durées pendant lesquelles chacun des vecteurs est appliqué. La moyenne des durées pondérées par l'intensité correspondant au vecteur permet d'obtenir le courant de point neutre délivré en sortie du redresseur. Toutefois, l'application des vecteurs de courant ne représente qu'une partie de la durée d'application d'un vecteur de courant de point neutre, autrement appelée période de découpage. On précise que le vecteur de courant de point neutre est le vecteur résultant de la somme vectorielle des vecteurs de courant appliqués. La durée restante est complétée par l'application d'un vecteur de roue libre, générant un courant de point neutre nul. Le tableau 1 comprend les trois combinaisons d'interrupteurs menant à un vecteur de roue libre (V01, V02, V03). L'interrupteur 1H correspond au transistor 22, l'interrupteur 2H correspond au transistor 29, l'interrupteur 3H correspond au transistor 36, l'interrupteur 1L correspond au transistor 20, l'interrupteur 2L correspond au transistor 27 et l'interrupteur 3L correspond au transistor 34.

**Tableau 1**

| Interrupteurs fermés | Courant Iph1 | Courant Iph2 | Courant Iph3 | Vecteurs courant |
|---|---|---|---|---|
| 1H - 2L | Idc | -Idc | 0 | V1 |
| 1H - 3L | Idc | 0 | -Idc | V2 |
| 2H - 1L | -Idc | Idc | 0 | V3 |
| 2H - 3L | 0 | Idc | -Idc | V4 |
| 3H - 1L | -Idc | 0 | Idc | V5 |
| 3H - 2L | 0 | -Idc | Idc | V6 |
| 1H - 1L | 0 | 0 | 0 | V01 |
| 2H - 2L | 0 | 0 | 0 | V02 |
| 3H - 3L | 0 | 0 | 0 | V03 |

L'application d'un vecteur de roue libre permet de compléter la durée d'application d'un vecteur ce qui permet d'obtenir des périodes de découpage toutes de même longueur quels que soient les temps d'application des vecteurs de courant remarquables. De plus, le courant de point neutre associé à ces vecteurs de roue libre étant nul, le résultat de l'application des vecteurs de courant remarquables n'est pas modifié du point de vue du courant de point neutre.

Toujours du point de vue du courant de point neutre, il importe peu que l'un ou l'autre des vecteurs de roue libre soit appliqué, de même que l'ordre d'application des différents vecteurs pendant la période de découpage n'importe pas. Seules les durées d'application et les coordonnées des vecteurs de courant dans l'espace de Fresnel comptent.

Toutefois, du point de vue de la haute tension négative, l'application de l'un ou l'autre des vecteurs de roue libre donne lieu à l'application d'un potentiel différent sur le conducteur 8, et donc une variation de la haute tension négative. Ces variations sont importantes tant en amplitude qu'en fréquence. En effet, la valeur de la haute tension négative est déterminée en fonction de quel interrupteur parmi les interrupteurs 20, 27, et 34 est actionné. Si l'interrupteur 20 est actionné, le potentiel Vph1 est appliqué. Si l'interrupteur 27 est actionné, le potentiel Vph2 est appliqué. Si l'interrupteur 34 est actionné, le potentiel Vph3 est appliqué. Les combinaisons d'interrupteurs permettant d'obtenir les différents vecteurs font ainsi intervenir les interrupteurs 20, 27, et 34.

Le tableau 2 illustre un procédé de commande d'un redresseur selon l'état de la technique.

**Tableau 2**

| Secteur | Vecteurs courant | Vecteur de roue libre |
|---|---|---|
| 1 | V1, V2 | V01 |
| 2 | V4, V2 | V03 |
| 3 | V4, V3 | V02 |
| 4 | V5, V3 | V01 |
| 5 | V5, V6 | V03 |
| 6 | V1, V6 | V02 |

On voit que le vecteur de roue libre change à chaque changement de secteur. En mettant en relation ces changements de vecteurs de roue libre, les écarts de potentiel explicités plus haut, ainsi que les potentiels de haute tension négative associés aux combinaisons menant aux vecteurs de courant remarquables, on comprend aisément que de violentes variations de la valeur de la haute tension négative puissent apparaitre. Ces variations se traduisent alors par l'apparition de forts courants de fuite.

Au cours d'une période de découpage, chaque combinaison d'interrupteurs peut éventuellement mener à un potentiel de haute tension négative différent. Au cours d'une période de découpage, on peut alors assister, dans le pire des cas, à l'application d'un premier potentiel lors de l'application d'un vecteur de courant remarquable, à l'application d'un deuxième potentiel lors de l'application d'un autre vecteur de courant remarquable, puis à l'application d'un troisième potentiel lors de l'application d'un vecteur de roue libre.

Un écart de tension apparait notamment si le vecteur de roue libre appliqué mène à une haute tension négative différente de celle issue de l'application précédente d'un vecteur de courant, remarquable ou de roue libre.

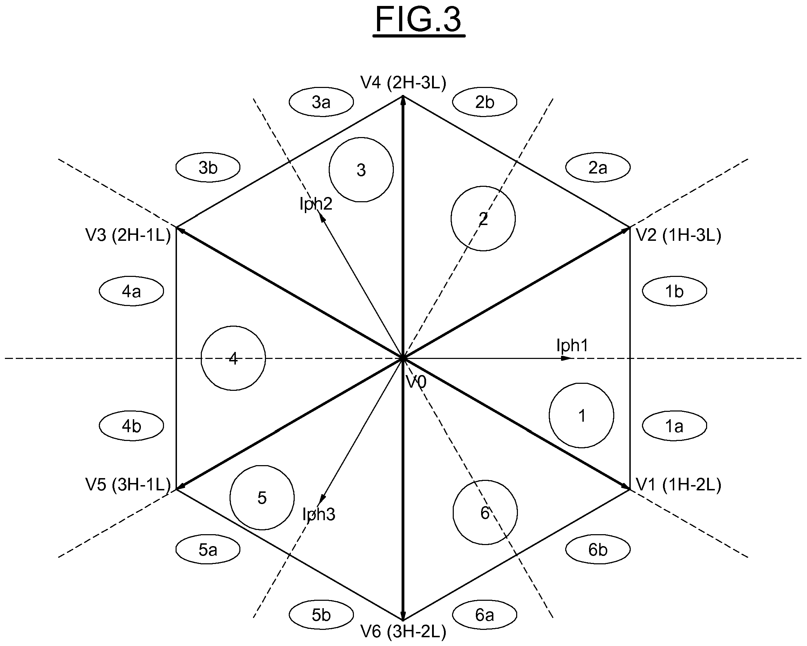

Afin de limiter ces variations, le procédé de commande selon l'invention réalise un contrôle du vecteur de roue libre appliqué en fonction des vecteurs de courant appliqués. Pour faciliter la minimisation des écarts de haute tension négative, les secteurs illustrés sur la figure 2 sont découpés en deux. On définit ainsi 12 secteurs notés de la à 6b, illustrés sur la figure 3. Il existe plusieurs procédés de commande possibles illustrés par les tableaux 2 à 9.

Un premier procédé de commande choisit, pour chaque combinaison de deux vecteurs donnés, un vecteur de roue libre qui présente un écart minimal de haute tension négative par rapport à la haute tension négative générée par le vecteur de courant remarquable dont la contribution au courant de point neutre est la plus importante. Ce procédé de commande est illustré par le tableau 3.

**Tableau 3**

| Secteur | Vecteurs courant | Vecteur de roue libre |
|---|---|---|
| 1a | V1, V2 | V02 |
| 1b | V1, V2 | V03 |
| 2a | V4, V2 | V03 |
| 2b | V4, V2 | V03 |
| 3a | V3, V4 | V03 |
| 3b | V3, V4 | V01 |
| 4a | V5, V3 | V01 |
| 4b | V5, V3 | V01 |
| 5a | V5, V6 | V01 |
| 5b | V5, V6 | V02 |
| 6a | V1, V6 | V02 |
| 6b | V1, V6 | V02 |

Un deuxième procédé de commande choisit, un vecteur de roue libre qui varie au sein d'un même secteur, mais dont l'écart avec la haute tension négative générée par l'application des vecteurs de courant remarquable correspond au plus à l'écart de tension entre deux phases. Bien que moins efficace que le premier procédé de commande, le deuxième procédé de commande n'en présente pas moins un avantage par rapport au procédé de commande de l'état de l'art. Ce procédé de commande est illustré par le tableau 4.

**Tableau 4**

| Secteur | Vecteurs courant | Vecteur de roue libre |
|---|---|---|
| 1a | V1, V2 | V03 |
| 1b | V1, V2 | V02 |
| 2a | V4, V2 | V02 |
| 2b | V4, V2 | V01 |
| 3a | V3, V4 | V01 |
| 3b | V3, V4 | V03 |
| 4a | V5, V3 | V03 |
| 4b | V5, V3 | V02 |
| 5a | V5, V6 | V02 |
| 5b | V5, V6 | V01 |
| 6a | V1, V6 | V01 |
| 6b | V1, V6 | V03 |

Un troisième procédé de commande applique un vecteur de roue libre sur quatre demi-secteurs consécutifs. Le premier vecteur de roue libre V01 est appliqué des secteurs 6b à 2a, le deuxième vecteur V02 est appliqué des secteurs 2b à 4a, le troisième vecteur V03 étant appliqué des secteurs 4b à 6a. Le troisième procédé de commande est illustré par le tableau 5.

**Tableau 5**

| Secteur | Vecteurs courant | Vecteur de roue libre |
|---|---|---|
| 1a | V1, V2 | V01 |
| 1b | V1, V2 | V01 |
| 2a | V4, V2 | V01 |
| 2b | V4, V2 | V02 |
| 3a | V3, V4 | V02 |
| 3b | V3, V4 | V02 |
| 4a | V5, V3 | V02 |
| 4b | V5, V3 | V03 |
| 5a | V5, V6 | V03 |
| 5b | V5, V6 | V03 |
| 6a | V1, V6 | V03 |
| 6b | V1, V6 | V01 |

Un quatrième procédé de commande applique le premier vecteur de roue libre V01 à tous les demi-secteurs. Le cinquième et le sixième procédés de commande appliquent respectivement le deuxième vecteur de roue libre V02 et le troisième vecteur de roue libre V03 à tous les demi-secteurs. Les quatrième, cinquième et sixième procédés sont illustrés respectivement par les tableaux 6, 7 et 8.

**Tableau 6**

| Secteur | Vecteurs courant | Vecteur de roue libre |
|---|---|---|
| 1a | V1, V2 | V01 |
| 1b | V1, V2 | V01 |
| 2a | V4, V2 | V01 |
| 2b | V4, V2 | V01 |
| 3a | V3, V4 | V01 |
| 3b | V3, V4 | V01 |
| 4a | V5, V3 | V01 |
| 4b | V5, V3 | V01 |
| 5a | V5, V6 | V01 |
| 5b | V5, V6 | V01 |
| 6a | V1, V6 | V01 |
| 6b | V1, V6 | V01 |

**Tableau 7**

| Secteur | Vecteurs courant | Vecteur de roue libre |
|---|---|---|
| 1a | V1, V2 | V02 |
| 1b | V1, V2 | V02 |
| 2a | V4, V2 | V02 |
| 2b | V4, V2 | V02 |
| 3a | V3, V4 | V02 |
| 3b | V3, V4 | V02 |
| 4a | V5, V3 | V02 |
| 4b | V5, V3 | V02 |
| 5a | V5, V6 | V02 |
| 5b | V5, V6 | V02 |
| 6a | V1, V6 | V02 |
| 6b | V1, V6 | V02 |

**Tableau 8**

| Secteur | Vecteurs courant | Vecteur de roue libre |
|---|---|---|
| 1a | V1, V2 | V03 |
| 1b | V1, V2 | V03 |
| 2a | V4, V2 | V03 |
| 2b | V4, V2 | V03 |
| 3a | V3, V4 | V03 |
| 3b | V3, V4 | V03 |
| 4a | V5, V3 | V03 |
| 4b | V5, V3 | V03 |
| 5a | V5, V6 | V03 |
| 5b | V5, V6 | V03 |
| 6a | V1, V6 | V03 |
| 6b | V1, V6 | V03 |

Un septième procédé de commande est une variante du premier procédé de commande. Il en diffère de par le décalage des vecteurs de roue libre appliqués sur chaque demi-secteur. Le vecteur appliqué dans le demi-secteur la selon le septième procédé de commande correspond au vecteur appliqué dans le demi-secteur 6b du premier procédé de commande. Les vecteurs de roue libre appliqués dans les autres demi-secteurs sont décalés de sorte que la succession de vecteurs appliqués par le premier procédé de commande soit conservée. Ce procédé de commande est illustré par le tableau 9.

**Tableau 9**

| Secteur | Vecteurs courant | Vecteur de roue libre |
|---|---|---|
| 1a | V1, V2 | V02 |
| 1b | V1, V2 | V02 |
| 2a | V4, V2 | V03 |
| 2b | V4, V2 | V03 |
| 3a | V3, V4 | V03 |
| 3b | V3, V4 | V03 |
| 4a | V5, V3 | V01 |
| 4b | V5, V3 | V01 |
| 5a | V5, V6 | V01 |
| 5b | V5, V6 | V01 |
| 6a | V1, V6 | V02 |
| 6b | V1, V6 | V02 |

Un huitième procédé de commande est une variante du premier procédé de commande. Il en diffère de par le décalage des vecteurs de roue libre appliqués sur chaque demi-secteur. Il en diffère de par le décalage des vecteurs de roue libre appliqués sur chaque demi-secteur. Le vecteur appliqué dans le demi-secteur la selon le septième procédé de commande correspond au vecteur appliqué dans le demi-secteur 1b du premier procédé de commande. Les vecteurs de roue libre appliqués dans les autres demi-secteurs sont décalés de sorte que la succession de vecteurs appliqués par le premier procédé de commande soit conservée. Ce procédé de commande est illustré par le tableau 10.

**Tableau 10**

| Secteur | Vecteurs courant | Vecteur de roue libre |
|---|---|---|
| 1a | V1, V2 | V03 |
| 1b | V1, V2 | V03 |
| 2a | V4, V2 | V03 |
| 2b | V4, V2 | V03 |
| 3a | V3, V4 | V01 |
| 3b | V3, V4 | V01 |
| 4a | V5, V3 | V01 |
| 4b | V5, V3 | V01 |
| 5a | V5, V6 | V02 |
| 5b | V5, V6 | V02 |
| 6a | V1, V6 | V02 |
| 6b | V1, V6 | V02 |

## Revendications

1. Procédé de commande des interrupteurs (20,22,27,29,34,36) d'un redresseur (3) de courant équipant un véhicule automobile muni d'un chargeur embarqué apte à être relié à un réseau triphasé de distribution électrique, **caractérisé par le fait qu'**il comprend des étapes au cours desquelles :
- on détermine une intensité de courant de point neutre (7) requis en sortie du redresseur,
- on détermine les coordonnées du vecteur de courant permettant l'obtention dudit courant de point neutre dans l'espace de Fresnel comprenant six secteurs délimités par six vecteurs remarquables (V1,V2,V3,V4,V5,V6),
- on détermine un demi-secteur comprenant le vecteur de courant parmi douze demi-secteur (1a,1b; 2a,2b; 3a,3b; 4a,4b; 5a,5b; 6a,6b) formant l'espace de Fresnel,
- on détermine une combinaison vectorielle pondérée des deux vecteurs remarquables délimitant le secteur de Fresnel permettant d'obtenir le vecteur de courant (Iph1, Iph2, Iph3)
- on détermine une séquence d'ouvertures et de fermetures des interrupteurs du redresseur de courant (20,22,27,29,34,36) en fonction des coefficients de pondération de la combinaison vectorielle pondérée des vecteurs remarquables, et
- on détermine une séquence d'ouvertures et de fermetures des interrupteurs du redresseur de courant (20,22,27,29,34,36) permettant d'obtenir un vecteur de roue libre (V0) pour la durée restante de la période de découpage minimisant les écarts de tension entre la masse et des redresseurs de tension (18,24,25,31,32,38) lors du passage d'une séquence d'ouvertures et de fermetures des interrupteurs du redresseur de courant (20,22,27,29,34,36) à une autre,
la séquence d'ouvertures et de fermetures des interrupteurs du redresseur de courant (20,22,27,29,34,36) permet d'obtenir un vecteur de courant (Iph1, Iph2, Iph3), une séquence d'ouvertures et de fermetures des interrupteurs du redresseur de courant (20,22,27,29,34,36) permettant d'obtenir un premier vecteur de roue libre (V0) si le demi-secteur comprenant le vecteur de courant (Iph1, Iph2, Iph3) est un demi-secteur (1a,1b; 2a,2b; 3a,3b; 4a,4b; 5a,5b; 6a,6b) parmi quatre demi-secteurs consécutifs, un deuxième vecteur de roue (V0) si le demi-secteur comprenant le vecteur de courant (Iph1, Iph2, Iph3), est un demi-secteur (1a,1b; 2a,2b; 3a,3b; 4a,4b; 5a,5b; 6a,6b) parmi quatre autres demi-secteurs consécutifs et un troisième vecteur de roue libre (V0) si le demi-secteur comprenant le vecteur de courant est un demi-secteur (1a,1b; 2a,2b; 3a,3b; 4a,4b; 5a,5b; 6a,6b) parmi les quatre demi-secteurs consécutifs restants, ou
la séquence d'ouvertures et de fermetures des interrupteurs du redresseur de courant (20,22,27,29,34,36) permettant d'obtenir un vecteur de roue libre (V0) demeure la même quelle que soit la séquence d'ouvertures et de fermetures des interrupteurs du redresseur de courant (20,22,27,29,34,36) permettant d'obtenir un vecteur de courant (Iphi, Iph2, Iph3).

## Patentansprüche

1. Steuerverfahren der Schalter (20, 22, 27, 29, 34, 36) eines Stromgleichrichters (3), der zur Ausstattung eines mit einem bordeigenen Ladegerät versehenen Kraftfahrzeugs gehört, der mit einem dreiphasigen Stromverteilungsnetz verbunden werden kann, **dadurch gekennzeichnet, dass** es Schritte enthält, während denen
- eine Stärke eines Sternpunktstroms (7) bestimmt wird, der am Ausgang des Gleichrichters erforderlich ist,
- die Koordinaten des Stromvektors bestimmt werden, die den Erhalt des Sternpunktstroms in der Fresnelzone ermöglichen, die sechs von sechs bemerkenswerten Vektoren (V1, V2, V3, V4, V5, V6) begrenzte Sektoren enthält,
- ein den Stromvektor enthaltender Halbsektor unter zwölf Halbsektoren (1a, 1b; 2a, 2b; 3a, 3b; 4a, 4b; 5a, 5b; 6a, 6b) bestimmt wird, die die Fresnelzone formen,
- eine gewichtete Vektorkombination der zwei den Fresnel-Sektor begrenzenden bemerkenswerten Vektoren bestimmt wird, die es ermöglicht, den Stromvektor (Iph1, Iph2, Iph3) zu erhalten,
- eine Folge von Öffnungen und Schließungen der Schalter des Stromgleichrichters (20, 22, 27, 29, 34, 36) abhängig von den Gewichtungskoeffizienten der gewichteten Vektorkombination der bemerkenswerten Vektoren bestimmt wird, und
- eine Folge von Öffnungen und Schließungen der Schalter des Stromgleichrichters (20, 22, 27, 29, 34, 36) bestimmt wird, die es ermöglicht, einen Freilauf-Vektor (V0) für die verbleibende Dauer der Taktungsperiode zu erhalten, der die Spannungsabweichungen zwischen der Masse und Spannungsgleichrichtern (18, 24, 25, 31, 32, 38) beim Übergang einer Folge von Öffnungen und Schließungen der Schalter des Stromgleichrichters (20, 22, 27, 29, 34, 36) zu einer anderen minimiert,
wobei die Folge von Öffnungen und Schließungen der Schalter des Stromgleichrichters (20, 22, 27, 29, 34, 36) es ermöglicht, einen Stromvektor (Iph1, Iph2, Iph3) zu erhalten,
wobei eine Folge von Öffnungen und Schließungen der Schalter des Stromgleichrichters (20, 22, 27, 29, 34, 36) es ermöglicht, einen ersten Freilauf-Vektor (V0), wenn der den Stromvektor (Iph1, Iph2, Iph3) enthaltende Halbsektor ein Halbsektor (1a, 1b; 2a, 2b; 3a, 3b; 4a, 4b; 5a, 5b; 6a, 6b) unter vier aufeinanderfolgenden Halbsektoren ist, einen zweiten Rad-Vektor (V0), wenn der den Stromvektor (Iph1, Iph2, Iph3) enthaltende Halbsektor ein Halbsektor (1a, 1b; 2a, 2b; 3a, 3b; 4a, 4b; 5a, 5b; 6a, 6b) unter vier anderen aufeinanderfolgenden Halbsektoren ist, und einen dritten Freilauf-Vektor (V0) zu erhalten, wenn der den Stromvektor enthaltende Halbsektor ein Halbsektor (1a, 1b; 2a, 2b; 3a, 3b; 4a, 4b; 5a, 5b; 6a, 6b) unter den verbleibenden vier aufeinanderfolgenden Halbsektoren ist, oder
wobei die Folge von Öffnungen und Schließungen der Schalter des Stromgleichrichters (20, 22, 27, 29, 34, 36), die es ermöglicht, einen Freilauf-Vektor (V0) zu erhalten, gleich bleibt, unabhängig von der Folge von Öffnungen und Schließungen der Schalter des Stromgleichrichters (20, 22, 27, 29, 34, 36), die es ermöglicht, einen Stromvektor (Iph1, Iph2, Iph3) zu erhalten.

## Claims

1. Method for controlling the switches (20, 22, 27, 29, 34, 36) of a current rectifier (3) in a motor vehicle fitted with an on-board charger that can be connected to a three-phase electricity distribution network, **characterized in that** it includes steps involving:
- Determination of an intensity of a neutral-point (7) current required at the output of the rectifier,
- Determination of the coordinates of the current vector enabling said neutral-point current to be obtained in the Fresnel space comprising six sectors delimited by six remarkable vectors (V1, V2, V3, V4, V5, V6),
- Determination of a half-sector comprising the current vector from twelve half-sectors (1a, 1b, 2a, 2b, 3a, 3b, 4a, 4b, 5a, 5b, 6a, 6b) forming the Fresnel space,
- Determination of a weighted vector combination of the two remarkable vectors delimiting the Fresnel sector enabling the current vector (Iph1, Iph2, Iph3) to be obtained,
- Determination of an opening/closing sequence of the switches of the current rectifier (20, 22, 27, 29, 34, 36) as a function of the weighting coefficients of the weighted vector combination of the remarkable vectors, and
- Determination of an opening/closing sequence of the switches of the current rectifier (20, 22, 27, 29, 34, 36) making it possible to obtain a freewheeling vector (V0) for the remaining duration of the switching period minimizing the voltage deviations between ground and voltage rectifiers (18, 24, 25, 31, 32, 38) when switching from one opening/closing sequence of the switches of the current rectifier (20, 22, 27, 29, 34, 36) to another, the opening/closing sequence of the switches of the current rectifier (20, 22, 27, 29, 34, 36) makes it possible to obtain a current vector (Iph1, Iph2, Iph3), an opening/closing sequence of the switches of the current rectifier (20, 22, 27, 29, 34, 36) making it possible to obtain a first freewheeling vector (V0) if the half-sector including the current vector (Iph1, Iph2, Iph3) is one of (1a, 1b, 2a, 2b, 3a, 3b, 4a, 4b, 5a, 5b, 6a, 6b) of four consecutive half-sectors, a second wheeling vector (V0) if the half-sector including the current vector (Iph1, Iph2, Iph3) is one (1a, 1b, 2a, 2b, 3a, 3b, 4a, 4b, 5a, 5b, 6a, 6b) of four other consecutive half-sectors, and a third freewheeling vector (V0) if the half-sector including the current vector is one (1a, 1b, 2a, 2b, 3a, 3b, 4a, 4b, 5a, 5b, 6a, 6b) of the four remaining consecutive half-sectors, or the opening/closing sequence of the switches of the current rectifier (20, 22, 27, 29, 34, 36) making it possible to obtain a freewheeling vector (V0) remains the same regardless of the opening/closing sequence of the switches of the current rectifier (20, 22, 27, 29, 34, 36) making it possible to obtain a current vector (Iph1, Iph2, Iph3).
